# EUROPEAN PATENT APPLICATION

(11) **EP 3 018 000 A2**
(43) Date of publication of application: **11.05.2016**
(21) Application number: 15186926.0
(22) Date of filing: 25.09.2015
(51) Int. Cl.: B60P 1/00, B60R 3/00

(54) **SAFETY GUARD SYSTEM AND METHOD OF USE THEROF**

(30) Priority: 05.11.2014 GB 201419693
(71) Applicant: Rapid EPS Limited, Gildersome Leeds Yorkshire LS27 7JU (GB)
(72) Inventor: Little, Ryan, Leeds, Yorkshire LS27 7JU (GB)
(74) Representative: Tomkinson, Alexandra

(57) **Abstract**

A safety guard system is provided for use with a raised platform. The system includes one or more extension portions mountable to the platform in use and arranged to be movable relative to the platform between a storage condition and an in-use condition. Barrier means are provided on or associated with one or more of the extension portions. The barrier means are movably mounted to one or more of the extension portions to allow the barrier means to be moved between a barrier in-use position and a barrier out-of-use position.

## Description

This invention relates to a safety guard system and to a method of use thereof.

Although the following description refers almost exclusively to a safety guard system for use on a trailer bed or flat bed of a truck, it will be appreciated by persons skilled in the art that the safety guard system can be used on any type of platform for which a removable or movable safety guard is required, such as a raised platform, vehicle flat bed, train flat bed and/or the like.

Vehicles with flat beds, such as trucks, typically have a raised flat bed on a trailer part of the vehicle to allow goods and/or materials to be transported. In certain cases, these goods and/or materials need to be manually handled in order to load and unload the trailer flat bed. This requires users to work on and/or around the trailer flat bed. A problem with this is that the trailer flat bed is typically significantly higher than a ground surface and there is a risk of the user falling from the trailer flat bed causing significant injury to the user.

In an attempt to overcome the problems associated with a user falling from a trailer flat bed, it is known to provide a safety guard system for the vehicle. One such system is disclosed in GB2468786 in which a walkway assembly for a trailer load bed has a walkway mountable to the load bed. The walkway is movable between a stowed condition and in use condition. A barrier arrangement is attachable to the walkway proximate an edge thereof and is adapted to be upstanding and substantially perpendicular to the plane of the walkway when the walkway is in the in-use condition. Means are provided for facilitating the movement of the walkway between the stowed condition and the in-use condition and these means are arranged so as to allow the walkway to both slide and pivot in moving between the in-use and stowed conditions.

Problems associated with the system disclosed in GB2468786 are that the barrier arrangement is always in the perpendicular upright position when attached to the walkway. As such, the vertical and/or horizontal barrier members of the barrier arrangement provide an obstruction to loading/unloading of goods and material to and from the flatbed when the barrier arrangement is fitted. In order to remove the obstruction, the barrier arrangement has to be removed from the flatbed. This is time consuming and requires significant physical effort by one or more users to undertake the removal of the barriers.

It is therefore an aim of the present invention to provide a safety barrier system that overcomes the abovementioned problems.

It is a further aim of the present invention to provide a method of using a safety barrier system that overcomes the abovementioned problems.

According to a first aspect of the present invention there is provided a safety guard system for use with a raised platform, said system including one or more extension portions mountable to the platform in use and arranged to be movable relative to the platform between a storage condition and an in-use condition; and barrier means provided on or associated with one or more of the extension portions, characterised in that the barrier means are movably mounted to one or more of the extension portions to allow the barrier means to be moved between a barrier in-use position and a barrier out-of-use position.

Thus, the present invention provides a safety guard system and/or barrier means that can remain attached to the platform and/or extension portions during both in-use and out-of-use conditions but is movable relative to the platform and/or extension portions between in-use and out-of-use positions. This prevents the barrier means from causing any obstruction during loading/unloading of the platform and removes the requirement for time consuming fitting and/or removal of the same in use.

Preferably the one or more extension portions are provided to extend the surface area of the platform when in the in use condition. In one example, the one or more extension portions form a walkway around a peripheral edge or edges of the platform when in the in use condition.

Preferably the one or more extension portions are in a retracted position or a relatively retracted position with respect to the platform when in the storage or out of use condition. Preferably the one or more extension portions are in an extended position or a relatively extended position with respect to the platform when in the in use condition.

Preferably the one or more extension portions extend outwardly from a surface or surfaces of the platform, and preferably from a peripheral edge or edges of the platform, when in the in use condition.

Preferably the one or more extension portions are arranged to be parallel or substantially parallel to the platform in the storage condition and/or the in use condition.

Preferably the barrier means is movably mounted to one or more extension portions when the extension portions are both in the out-of-use or storage condition and the in-use condition. Thus, in one example, the barrier means can be in a barrier in-use position irrespective of the position of the extension portions. In one example, the barrier means can only be in a barrier in-use position if the extension portions are also in an in-use position.

Preferably the barrier means are independently movable and/or adjustable with respect to the one or more extension portions. Thus, the barrier means are movable independently of movement of one or more extension portions.

Preferably the barrier means are pivotably, slidably, hingedly and/or rotatably mountable and/or movable with respect to the one or more extension portions.

In one embodiment the barrier means are pivotably mounted using a pivot pin/means arrangement. The barrier means are typically pivoted around a pivot axis of the pivot pin/means arrangement in moving between the barrier in-use position and the barrier out-of-use position.

In one embodiment the pivot pin/means is movably mounted in a slot such that the barrier means is capable of undergoing sliding movement and/or pivotable/rotatable movement in use. The slot can be defined in an extension portion or on a component associated with the extension portion.

In one embodiment the barrier means are pivotably and/or rotatably mounted using pivot means or a pivot pin arrangement having first and at least second pivot points or axes.

Preferably the first and at least second pivot point or axes are different or significantly different to each other.

In one embodiment the first pivot point or axis is provided between the pivot means or pivot body and the extension portion. Preferably the second pivot point or axis is provided between the pivot means or pivot body and the barrier means.

In one embodiment the pivot means or pivot body is typically in the form of an elongate arm or pair of elongate arm members having first and at least second pivot points or axes. Preferably the pivot points or axes are provided at, towards or associated with opposite ends of the elongate arm member(s).

Preferably each of the first and second pivot points is provided in or associated with a separate slot. The slots are typically a spaced distance apart.

Preferably a longitudinal axis of each slot is substantially parallel to a longitudinal axis of the pivot means.

In a preferred embodiment the at least second pivot point or axis is provided between or midway between the ends of an upright barrier member forming part of the barrier means.

In one embodiment the pivot means or axis of the barrier means or first pivot point or axis of the barrier means is provided on or associated with a socket portion provided on or associated with the extension portion.

Preferably a portion of the barrier means can be moved relative to and/or into and from the socket portion, in addition to pivoting about said pivot point means or axis or first pivot point means or axis.

Preferably at least part of the barrier means is perpendicular or substantially perpendicular to the platform and/or extension portions when in the barrier in-use position.

Preferably at least part of the barrier means protrudes in an upwardly or substantially vertical direction above the upper surface of the platform and/or extension portions when in the barrier in-use position.

In one embodiment the barrier means are movably mounted with respect to the one or more extension portions such that in the barrier out-of-use position at least part of the barrier means are parallel to, substantially parallel to, adjacent to, overlapping, overlying and/or in abutting relationship with an upper surface of the platform and/or extension portions.

In one embodiment the barrier means are movably mounted with respect to the one or more extension portions such that in the barrier out-of-use position at least part of the barrier means, and preferably a whole or significant part of the barrier means, is positioned below the upper surface of the platform and/or extension portions.

Preferably at least part of the barrier means is perpendicular or substantially perpendicular to and below the upper surface of the platform and/or extension portions when in the barrier out-of-use position.

In one embodiment at least part of the barrier means are movable between a first barrier out-of-use position and at least a second barrier out-of-use position. Preferably the first and second barrier out-of-use positions are different positions.

In the first barrier out-of-use position, at least part of the barrier means are substantially parallel to, adjacent to, overlapping, overlying and/or in abutting relationship with an upper surface of the platform and/or extension portions. In the second barrier out-of-use position, at least part of the barrier means are positioned below the upper surface of the platform and/or extension portions and optionally perpendicular or substantially perpendicular to and below the upper surface of the platform and/or extension portions.

The first barrier out-of-use position can be used when the platform is in a transportation stage and/or when there are no or fewer goods or materials located on the platform. The second barrier out-of-use position can be used when the platform is being unloaded and/or loaded.

Preferably a plurality of barrier means are provided and one or more of the barrier means are independently movable between the barrier in-use position, and the first barrier out-of-use position and/or the second barrier out-of-use position with respect to one or more other barrier means.

In one embodiment a barrier means includes at least two upright and spaced apart barrier members with at least one horizontal barrier member or panel located therebetween.

In one embodiment the at least part of the barrier means movable between the barrier in-use and barrier out-of-use positions includes one or more barrier members which are substantially upright, perpendicular, transverse or vertical with respect to the platform and/or extension portions when in the barrier in-use position.

In one embodiment the at least part of the barrier means movable between the barrier in-use and barrier out-of-use positions includes one or more barrier members which are substantially horizontal and/or parallel with respect to the platform and/or extension portions when in the barrier in-use position.

In one embodiment the at least part of the barrier means movable between the barrier in-use and barrier out-of-use positions includes one or more barrier members which are substantially horizontal and/or parallel with respect to the platform when in the in-use position and one or more barrier members which are substantially upright, perpendicular, transverse or vertical with respect to the platform when in the barrier in-use position.

In one embodiment the barrier means includes two or more barrier members and at least one of the barrier members is telescopically and/or slidably movable with respect to at least one other barrier member. This allows the size and/or height of the barrier means to be adjusted as required.

Preferably the at least one barrier member is telescopically and/or slidable movable with respect to at least one other barrier member between a first retracted position and at least a second extended position. Preferably the barrier members are moved to an extended position when the barrier means are in-use. The barrier members are moved to a retracted position when the barrier means are not being used.

Preferably at least one substantially upright or vertical barrier member is telescopically and/or slidably movable with respect to at least one other substantially upright or vertical barrier member to increase the height of the barrier means or decrease the height of the barrier means as required.

Preferably locking means are provided to lock the slidable or telescopic barrier members in a required position, such as for example in the first retracted position and/or the at least second extended position, and/or in a barrier in-use position and /or barrier out-of-use position.

Preferably the barrier means are movably mounted at, towards or proximal a peripheral or outermost edge or end of one or more extension portions.

In one embodiment the extension portion includes socket means provided on, adjacent to or associated with a peripheral or outermost edge or end of the one or more extension portions. A lower end or portion of the barrier means can be movably or removably located in the socket means when moving from the barrier out-of-use position to the barrier in-use position.

Securing means can be provided to secure at least part of the barrier means in a required position with respect to the extension portion and/or socket means in use. For example, the securing means can secure the barrier means in a barrier in-use position or barrier out-of-use position. The securing means can include any or any combination of one or more nuts and bolts, pins, screws, clips, inter-engaging members and/or the like.

Preferably the platform has a pre-defined area and the one or more extension portions increases or extends this pre-defined area of the platform when in an in-use condition.

Preferably the platform has a peripheral edge and the one or more extension portions are movable with respect to the peripheral edge of the platform between the barrier in-use and barrier out-of-use conditions.

Preferably the one or more extension portions protrude outwardly from one or more sides of the platform when in the in-use condition.

Preferably the one or more extension portions are provided substantially within the peripheral edge of the platform when in an out-of-use condition. This ensures the extension portions do not effect the width of the platform when not being used.

Preferably the one or more extension portions are slidably and/or pivotably mountable to the platform to allow the one or more extension portions to be moved between the in-use and out-of-use conditions.

In one embodiment guide means are provided and at least part of the one or more extension portions are movable relative to the guide means. For example, the one or more extension portions can be slidably mounted in or with respect to the guide means between the in-use or extended position and the out-of-use/storage or retracted conditions.

Preferably the guide means includes one or more guide rails, channel members, sleeve members and/or the like. Further preferably the guide means includes two spaced apart and substantially parallel channel members, sleeve members, guide rails and/or the like.

Preferably the guide means are provided on, attached to or associated with the raised platform in use.

Stop means can be provided on or associated with the guide means and/or extension portions to limit movement of the extension portions with respect to the guide means. This prevents the extension portions from being moved beyond the in-use and out-of-use conditions. The stop means can include one or more ribs, protrusions and/or the like.

In one embodiment the extension portion includes attachment means or portions provided on at least one side, and preferably both sides of the extension portion, and the attachment means are slidably mounted in or with respect to the guide means in use.

The one or more extension portions are typically substantially planar or flat members.

Preferably the one or more extension portions provide a walk way for one or more users around the peripheral edge of the platform when in the in-use condition.

In one example, the one or more extension portions include or comprise a panel member, or a meshed or lattice panel member.

The platform is typically a substantially planar or flat surface. The platform can consist of a single platform member or a plurality of platform members joined together and/or in abutting relationship.

Preferably an upper surface of the one or more extension portions is substantially flush with an upper surface of the platform when in the in-use condition.

According to a second aspect of the present invention there is provided a method of using a safety guard system, said method including the steps of moving one or more extension portions that are movably mountable to a raised platform in use between a storage condition and an in-use condition; moving barrier means that are movably mounted to one or more of the extension portions between a barrier in-use position and a barrier out-of-use position.

In one example, the extension portions are moved from a storage condition to an in-use condition. The barrier means are then moved from a barrier out-of-use position to a barrier in-use position, or from a first out-of-use position to a second out-of-use position.

In one example the barrier means are moved from a barrier out-of-use position to a barrier in-use position without movement of the extension portion.

The barrier means and extension portions are moved in reverse when moving from an in use position to an out of use position or from a second out of use position to a first out of use position.

According to a third aspect of the present invention there is provided a platform with a safety guard system.

According to further independent aspects of the present invention there is provided a vehicle with a safety guard system; a truck with a safety guard system, and a vehicle trailer or vehicle flat bed with a safety guard system; and methods of use thereof.

Embodiments of the present invention will now be described with reference to the accompanying figures, wherein:
Figures 1a and 1b show a perspective view of a trailer flatbed for a truck with the safety guard system in a first out-of-use condition, and an enlarged detailed view of part of the trailer flatbed in figure 1a in the first out-of-use condition respectively;
Figures 2a and 2b show a perspective view of a trailer flatbed for a truck with the safety guard system in an in-use condition, and an enlarged detailed view of part of the trailer flatbed in figure 2a in the in-use condition respectively;
Figures 3a and 3b show a perspective view of the trailer flatbed in figures 2a and 2b when loaded with goods and some of the barrier means provided in a second out-of-use condition, and an enlarged detailed view of part of the trailer flatbed in figure 3a respectively;
Figures 4a and 4b show a perspective view of an extension portion and barrier means in a first out-of-use condition, and a perspective view of the extension portion and barrier means in an in-use condition respectively;
Figures 5a-5h show a series of stages of moving an extension portion and barrier means from a first out-of-use condition to an in-use condition and to a second out-of use condition according to a first embodiment;
Figures 6a-6h show a series of stages of moving an extension portion and barrier means from a first out-of-use condition to an in-use condition and to a second out-of use condition according to a second embodiment;
Figures 7a and 7b show a rear perspective view and a front perspective view of the pin and aperture mechanism shown in figures 5a-5h respectively; and
Figures 8a and 8b show a rear perspective view and a front perspective view of the pin and slot mechanism shown in figures 6a-6h respectively.

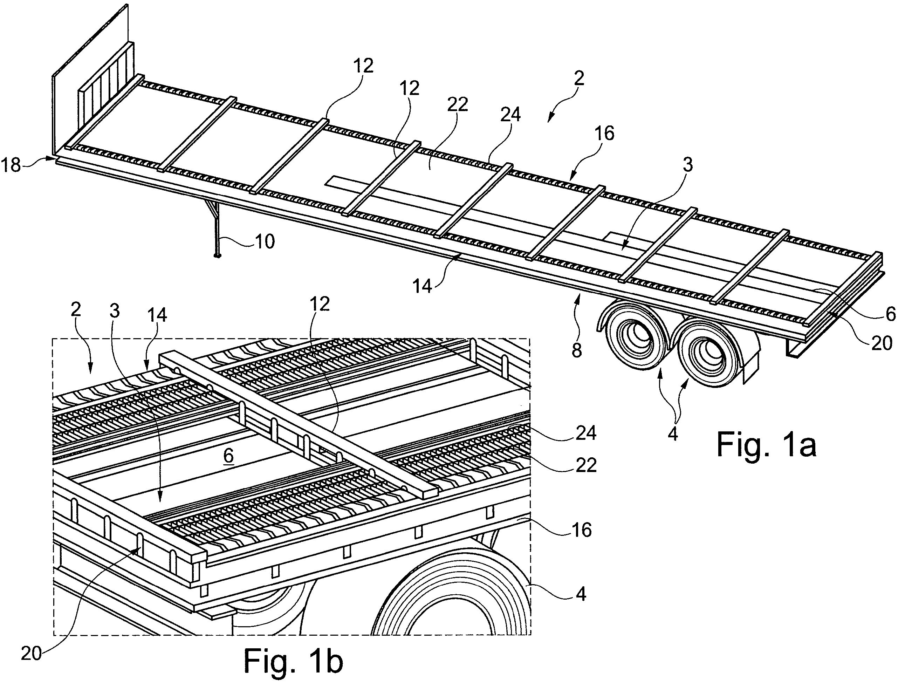

Referring to Figures 1a-1b, there is illustrated a trailer flatbed 2 for a truck. The flatbed 2 consists of a raised platform 3 having an upper surface 6 and a lower surface 8. The raised platform 3 is located a distance above a ground surface on which the flatbed 2 is located. A plurality of wheels 4 are associated with a lower surface 8 of platform 3 to allow the flatbed to be transported in use. One or more support legs 10 can also be associated with a lower surface 8 of platform 3 to allow the platform 3 to be supported in use when the truck is not attached to the trailer flatbed. The one or more support legs 10 are typically movable between an in-use position, as shown in figure 1a when the truck is not attached to the flatbed, and a storage position (not shown) when the truck is attached to the flatbed.

The platform 3 has two opposing sides 14, 16, a front end 18 normally adjacent the truck in use, and a rear end 20 furthest from the truck in use. A plurality of support struts 12 are typically arranged on platform 3 in a direction substantially transverse to the longitudinal axis of the platform between sides 14 and 16. The support struts 12 support the weight of goods and/or materials placed on the platform 3 in use.

In order for a user to manually help load and/or unload goods and/or materials from the upper surface 6 of raised platform 3, the user typically has to access the upper surface. A safety guard system is provided to allow a user to safely walk around the periphery of the platform without risk of them falling from the platform.

The safety guard system includes a walk way provided around the peripheral edge of platform 3 to allow the user to walk around the platform and this walkway comprises a plurality of extension portions 22. The walkway/extension portions have barrier means 24 to prevent a person from falling from the walkway/extension portions in use. The extension portions 22 and barrier means 24 are each independently movable between an in-use condition and an out-of-use condition. In the illustrations, a single extension portion 22 is provided on each side of the platform 3 between two support struts 12. A single barrier means 24 is movably mounted to the single extension portion 22. However, it will be appreciated that any number of extension portions can be provided between the support struts and any number of barrier means can be provided associated with an extension portion.

In accordance with the present invention, in the out-of-use condition as shown in figures 1a and 1b, the extension portions 22 (and barrier means 24) are located within the peripheral edge of the platform 3 in overlapping relationship with the upper surface 6 of the platform 3. The planar surface of the extension portion 22 is parallel to the planar surface of the platform 3. The barrier means 24 is also in a barrier out of use position and is in overlapping and parallel relationship with the extension portions and platform.

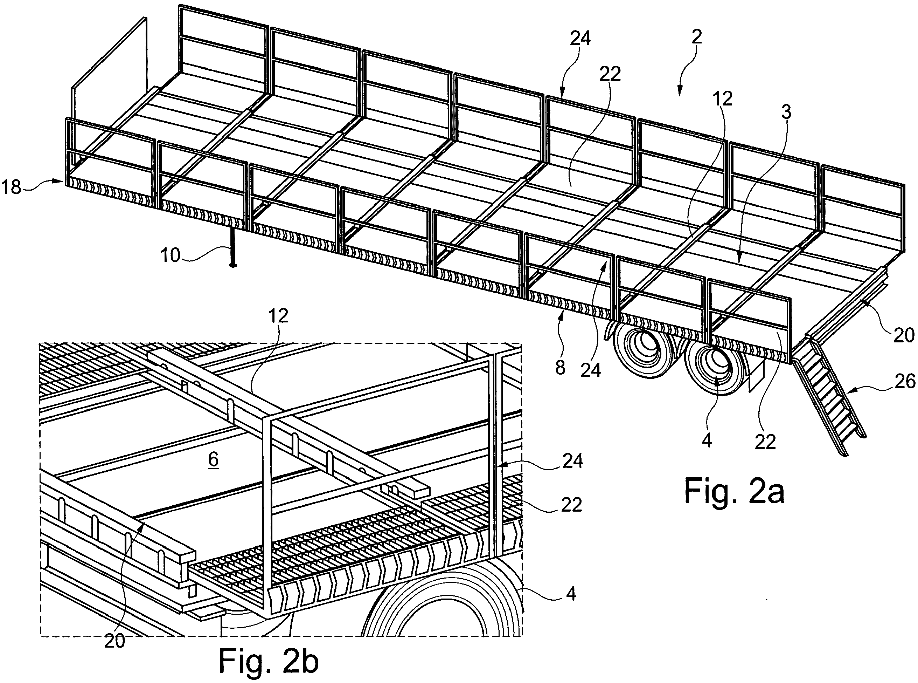

In order to move the extension portions 22 from the out-of-use condition to an in-use condition, as shown in figures 2a and 2b, the extension portions 22 are slid in an outwardly direction from the sides 14, 16 of platform 3. The barrier means 24 are then pivotably movable from the out-of-use position, wherein the barrier means are parallel, adjacent to and in overlapping relation with the extension portion, to an in-use position, wherein the barrier means are perpendicular to the extension portion 22 and protrude above the extension portion. Thus, in the illustration, the barrier means are horizontal when in the out-of-use position and vertical when in the in-use position.

A ladder 26 can be detachably attached or movably mounted to an extension portion 22 adjacent the rear 20 of the flatbed 2 (or any suitable location on the walkway) to allow a user to access the extension portion walkway when in the in-use position.

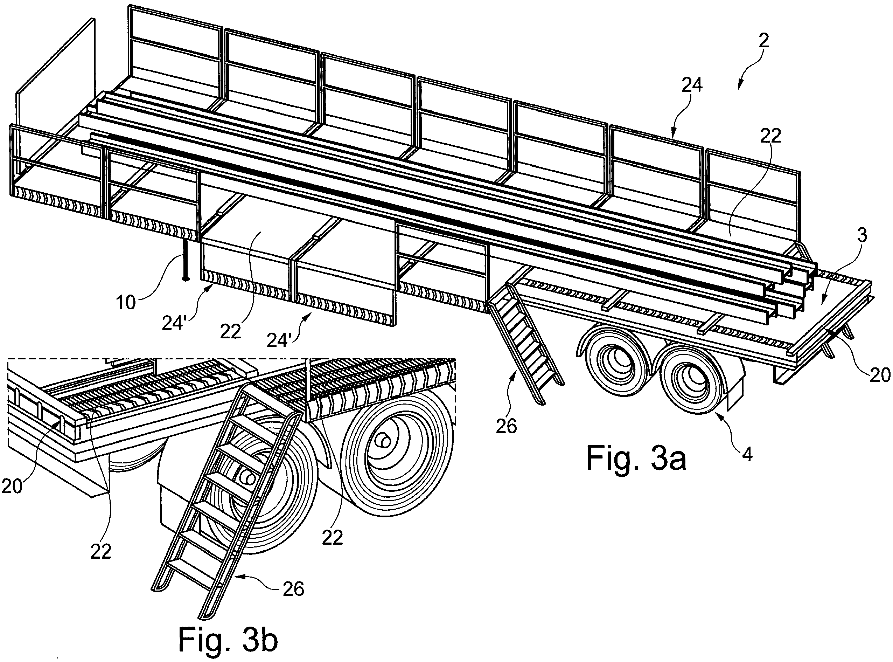

With reference to Figures 3a and 3b, it can be seen that each of the extension portions and barrier means are independently movable relative to any other extension portion or barrier means to allow the size of the walkway to be adjusted as required. In addition, it can be seen that the barrier means 24' can be moved to a second out-of-use position that is different to the first out-of-use position shown in Figures 1a-1b, as will be described in more detail below. Goods 28 can be loaded on to upper surface 6 of platform 3 irrespective of whether all the extension portions are in an in-use position or out-of-use position.

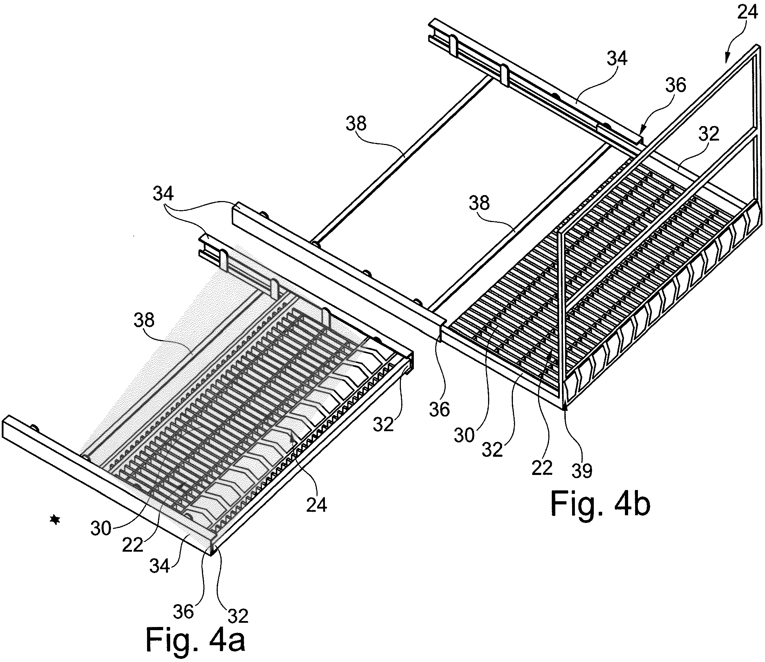

With reference to Figures 4a and 4b, a more detailed view is provided of how the extension portions 22 and barrier means 24 moves from a first out-of-use position to an in-use position. Each extension portion 22 comprises a meshed and planar panel member 30 having attachment portions 32 either side thereof. The attachment portions 32 are slidably mounted in guide channels/rails 34. Each attachment portion 32 is typically an elongate arm member. Guide rails 34 are typically elongate in form and are provided a parallel and spaced distance apart. In the illustrations, the guide rails 34 are joined to the side walls of the support struts 12 on upper surface 6 of platform 3. However, the guide rails could be joined directly to platform 3 if required. In the first out-of-use position, the free end of panel member 30 is substantially flush with the open end 36 of the guide rail 34. In the in-use position, the free end of panel member 30 is slid outwardly of open end 36 to a position where the free end is a spaced distance apart from open end 36. In this position, the upper surface of panel member is typically flush or substantially flush with the upper surface 6 of platform 3. Stop means can be provided on or associated with the attachment portions and/or guide rails 34 to limit the outward and/or inward movement of the attachment portions with respect to the guide rails in use. Support rails 38 can be provided between guide rails 34 to provided rigidity and strength to the same. The support rails are preferably provided transverse or perpendicular to the longitudinal axis of the guide rails 34.

Once the panel member 30 is slid to its outermost or extended position, as shown in figure 4b, the barrier means 24 can be pivotably moved from the out-of-use position to the in-use position. The barrier means 24 are typically pivoted about a pivot pin provided at free end 39 of the attachment portions 32.

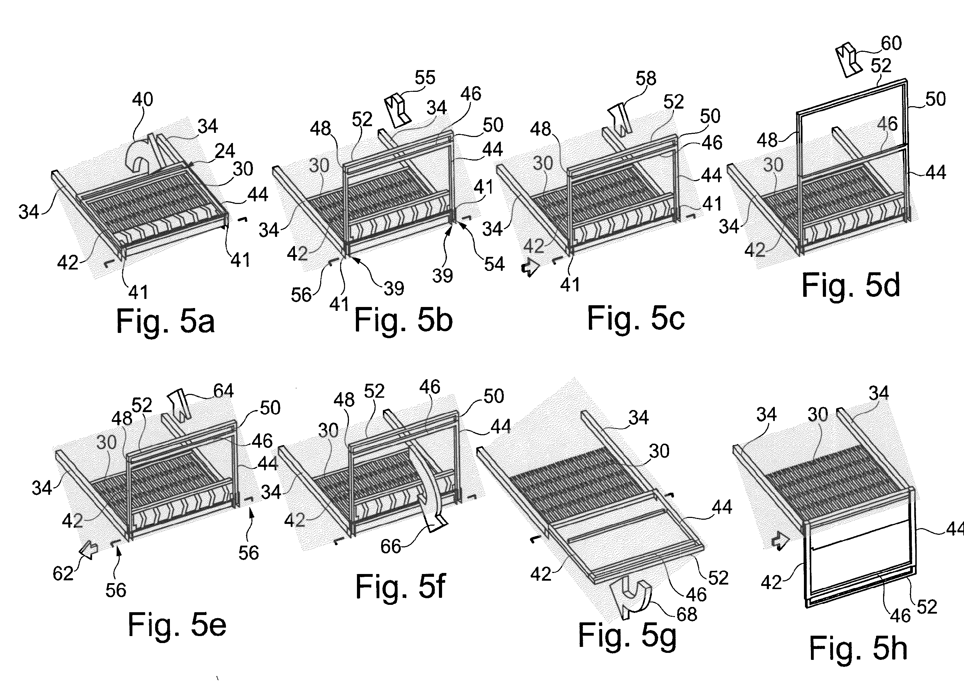

Referring to figures 5a-5h, there is illustrated the steps involved in moving the barrier means 24 from a first out-of-use position, to an in-use position, and then to a second out-of-use position according to a first embodiment of the present invention.

In this embodiment, the barrier means 24 comprises two upright barrier members 42, 44 that are a spaced distance apart and substantially parallel, when in an in-use position, and a lower transverse barrier member 46 provided between the upper ends of barrier members 42, 44. Telescopic upright barrier members 48, 50 are telescopically mounted in the upper open ends of upright barrier members 42, 44 for movement between extended and retracted positions. An upper transverse barrier member 52 is provided between the upper ends of barrier members 48, 50. In the first out-of-use position, the barrier means 24 is parallel, adjacent to and in overlapping relationship with the extension panel member 30, as shown in figure 5a. The barrier members 48, 50 are in a retracted position with respect to barrier members 42, 44. In moving the barrier means towards an in-use position, the barrier means 24 is pivoted in an upwardly direction, as shown by arrow 40. The barrier means is typically moved through 90 degrees in this step.

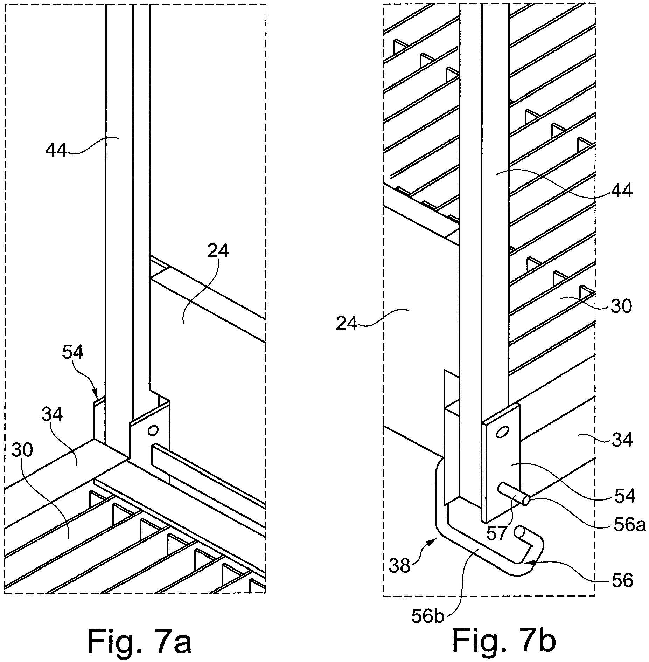

The lower ends 41 of upright barrier members 42, 44 are then lowered into socket portions 54 provided at free end 38, as shown by arrow 55, and a pin 56 is used to secure the upright barrier members 42, 44 in the upright in-use position, as shown by figure 5b and figure 7b. The pin 56 in the illustration in figure 7b has a substantially linear portion 56a used to pass through an aperture 57 defined in socket 54, and a handle portion 56b to allow a user to manipulate the pin in use. The linear portion 56a is slidably engaged into and from the aperture 57 in use.

Once the upright barrier members 42, 44 are securely in place in an upright position, the upright barrier members 48, 50 are then telescopically extended from the open ends of upright barrier members 42, 44, as shown by arrow 58 in figure 5c. The upright barrier members 48, 50 are locked in position using locking means, such as one or more pins and/or the like. Figure 5c shows the extension portion 22 and the barrier means 24 in a fully in-use position.

Once the barrier means are ready to be moved to an out-of-use position, the upright barrier members 48, 50 are lowered/retracted with respect to upright barrier members 42, 44, as shown by arrow 60 in figure 5d.

The pins 56 are removed from the socket apertures 57 of barrier members 42, 44, as shown by arrow 62 and the lower ends 41 of barrier members 42, 44 are lifted clear of socket 54, as shown by arrow 64 in Figure 5e. The barrier means 24 can then be pivoted inwardly of the panel member 30 to return to the first out-of-use position shown in Figure 5a. Alternatively, the barrier means 24 can be pivoted outwardly of the panel member 30, as shown by arrow 66 in figure 5f to a second out-of-use position. Barrier means 24 are moved through 90 degrees initially, as shown by arrow 68 in Figure 5g, and then through a further 90 degrees (180 degrees in total from the in-use position to the second out-of-use position), as shown in Figure 5h. The pins 56 can then be reinserted to secure the barrier means 24 in the second out-of-use position. In this position, the barrier means 42, 44 are in an upright position, are perpendicular to the upper surface of panel member 30 and are below upper surface 30 (and also platform 3).

The barrier means could be moved from the first out of use condition to the second out of use condition and vice versa without forming the intermediate in-use position.

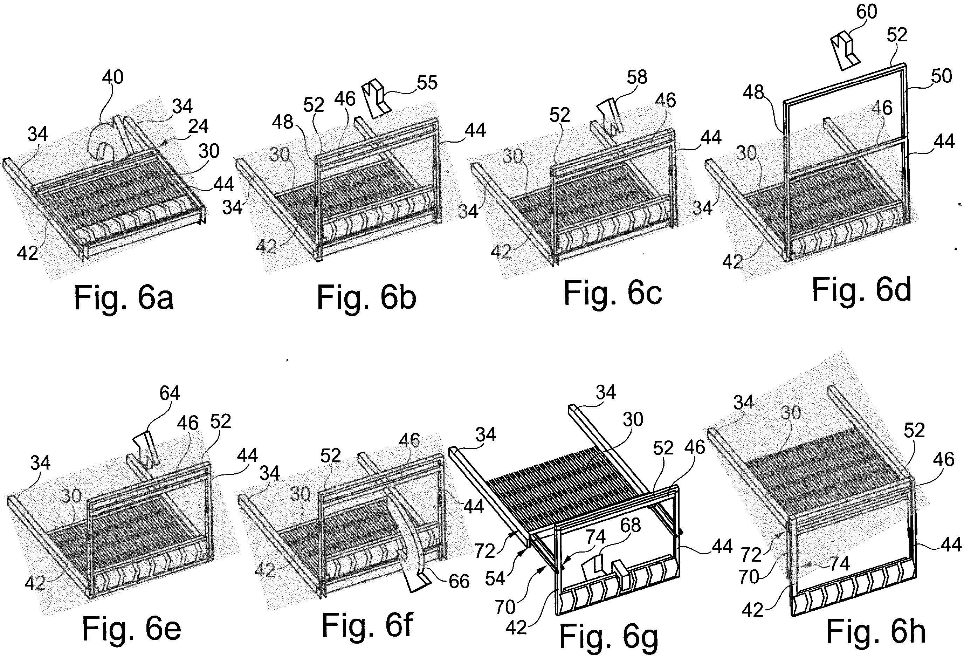

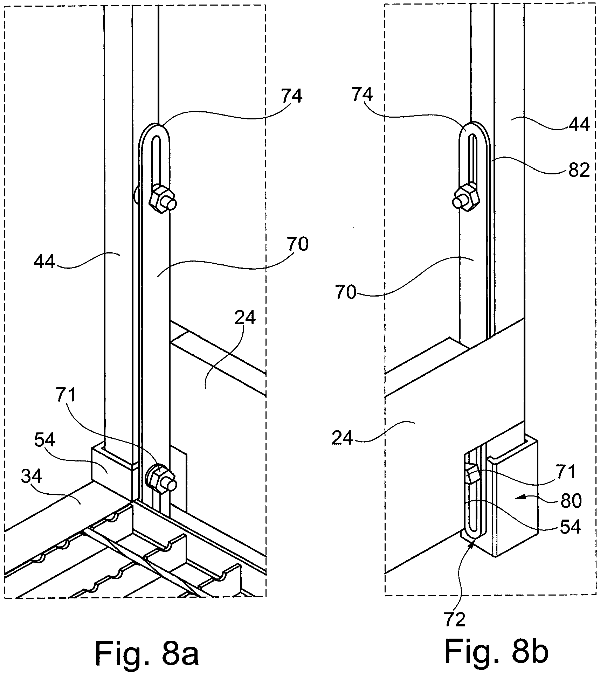

Referring to figures 6a-6h, there is illustrated the steps involved in moving the barrier means 24 from a first out-of-use position, to an in-use position, and then to a second out-of-use position according to a second embodiment of the present invention. The steps shown in Figures 6a-6f are largely the same as those of Figures 5a-5f. However, in the second embodiment each of the upright barrier members 42, 44 is pivotably joined to the socket portions 54 by a pair of elongate pivot arms 70, as shown in figures 8a and 8b. More particularly, elongate pivot arm 70 has a first elongate slot 80 provided adjacent a first end 72 of elongate pivot arm 70 and a second elongate slot 82 provided adjacent a second end 74 of elongate pivot arm 70. The longitudinal axes of slots 80, 82 are substantially parallel to the longitudinal axis of the pivot arm 70. A nut and bolt assembly 71 is secured to upright barrier member 44 (and 42) and is slidably mounted in each of slots 80, 82. The pivot arm 70 is pivotably mounted to barrier members 42, 22 adjacent the socket portion 54 via nut and bolt assembly 71, and second end 74 of pivot arm 70 is pivotably mounted at a midway point between ends of barrier members 42, 44. The elongate pivot arms 70 allow the upright barrier means to be moved a spaced distance away from free end 39 of attachment portions 32, as shown in Figure 6g, prior to being lowered to the second out-of-use position, as shown in Figure 6h, which is the same as the position shown in Figure 5h.

## Claims

1. A safety guard system for use with a raised platform, said system including one or more extension portions mountable to the platform in use and arranged to be movable relative to the platform between a storage condition and an in-use condition; and barrier means provided on or associated with one or more of the extension portions, **characterised in that** the barrier means are movably mounted to one or more of the extension portions to allow the barrier means to be moved between a barrier in-use position and a barrier out-of-use position.

2. The system according to claim 1 wherein the barrier means are independently movable and/or adjustable with respect to the extension portions.

3. The system according to claim 1 wherein the barrier means are pivotably, slidably, hingedly and/or rotatably mountable and/or movable with respect to the one or more extension portions.

4. The system according to claim 1 wherein the barrier means are pivotably mounted to the one or more extension portions using a pivot pin or pivot means arrangement having first and at least second pivot points or axes.

5. The system according to claim 1 or claim 4 wherein a pivot means or axis or first pivot point or axis of the barrier means is provided on or associated with at least one socket portion, the at least one socket portion provided on or associated with the one or more extension portions.

6. The system according to claim 1 wherein the barrier means are perpendicular or substantially perpendicular to the platform and/or one or more extension portions when in the barrier in use position.

7. The system according to claim 1 wherein the barrier means are movably mounted with respect to the one or more extension portions such that in the barrier out-of-use position, at least part of the barrier means are parallel to, substantially parallel to, adjacent to, overlapping, overlying and/or in abutting relationship with an upper surface of the platform and/or one or more extension portions.

8. The system according to claim 1 wherein the barrier means are movably mounted with respect to the one or more extension portions such that in the barrier out-of-use position, at least part of the barrier means, and preferably a whole or significant part of the barrier means is positioned below an upper surface of the platform and/or one or more extension portions.

9. The system according to claim 1 wherein the barrier means are movable between a first barrier out-of-use position and at least a second barrier out-of-use position.

10. The system according to claim 1 wherein a plurality of barrier means are provided and one or more of the barrier means are independently movable between the barrier in-use position and the barrier out-of-use position or the first and/or second barrier out-of use positions with respect to one or more other barrier means.

11. The system according to claim 1 wherein the barrier means includes two or more barrier members, and at least one of the barrier members is telescopically and/or slidably movable with respect to at least one other barrier member.

12. The system according to claim 11 wherein locking means are provided to lock the barrier members in a required position relative to each other.

13. The system according to claim 1 wherein securing means are provided to secure at least part of the barrier means in a required position with respect to the extension portion and/or a socket portion of the extension portion.

14. The system according to claim 1 wherein guide means are provided at least part of the one or more extension portions are movable relative to the guide means between the in use condition and the storage condition.

15. A method of using a safety guard system, said method including the steps of moving one or more extension portions that are movably mountable to a raised platform in use between a storage condition and an in-use condition; moving barrier means that are movably mounted to one or more of the extension portions between a barrier in-use position and a barrier out-of-use position.
